Europäisches Patentamt

European Patent Office

Office européen des brevets

(19)

(11) Veröffentlichungsnummer: **0 028 001**
A1

(12) **EUROPÄISCHE PATENTANMELDUNG**

(21) Anmeldenummer: **80106424.7**

(22) Anmeldetag: **21.10.80**

(51) Int. Cl.³: **H 04 L 7/02, H 03 L 7/00**

(30) Priorität: **30.10.79 DE 2943865**

(43) Veröffentlichungstag der Anmeldung: **06.05.81**
**Patentblatt 81/18**

(84) Benannte Vertragsstaaten: **AT BE CH DE FR GB IT LI LU NL SE**

(71) Anmelder: **SIEMENS AKTIENGESELLSCHAFT Berlin und München, Postfach 22 02 61, D-8000 München 22 (DE)**

(72) Erfinder: **Kloeber, Peter, Dipl.-Ing., Uhdestrasse 20, D-8000 München 71 (DE)**

(54) Schaltungsanordnung zur empfangsseitigen Taktrückgewinnung bei digitaler taktgebundener Nachrichtenübertragung.

(57) Die Erfindung bezieht sich auf eine Schaltungsanordnung zur empfangsseitigen Taktrückgewinnung bei digitaler taktgebundener Nachrichtenübertragung. Zur Erreichung eines einfachen Aufbaues einer solchen Schaltungsanordnung sieht die Erfindung vor, dass im Empfänger einem das digitale Nachrichtensignal (d.n.) umwandelnden Digital-Konverter (2) eingangsseitig ein Schaltungszweig parallel angeschaltet ist, der aus einem Exklusiv-Oder-Gatter (3) mit zwei Eingängen und einem Verzögerungselement (4) in der Zuleitung zu einem Eingang und aus einem mit dem Ausgang der Exklusiv-Oder-Gatters (3) verbundenen Digitalzähler (DZ2) besteht. Der Digitalzähler (DZ2) wird von einem quarzstabilisierten Oszillator mit einer Frequenz vom Vielfachen der gewünschten Taktfrequenz angesteuert. Sein Ausgang ist mit dem Digital-Konverter (2) verbunden. Die erfindungsgemässe Schaltungsanordnung ist insbesondere für den Einsatz beim Betriebsbahnfunk geeignet.

ACTORUM AG

SIEMENS AKTIENGESELLSCHAFT        Unser Zeichen
Berlin und München               VPA 79 P 6 6 9 8 EUR

## Schaltungsanordnung zur empfangsseitigen Taktrückgewinnung bei digitaler taktgebundener Nachrichtenübertragung

Die Erfindung bezieht sich auf eine Schaltungsanordnung zur empfangsseitigen Taktrückgewinnung bei digitaler taktgebundener Nachrichtenübertragung.

Die Erzeugung eines zum digitalen Nachrichtensignal bitsynchronen Taktes, d.h. Synchronität in Frequenz und Phase, für den Empfang ist in verschiedenen Fällen digitaler Nachrichtenübermittlung, z.B. PCM, Deltamodulation, Diphasecodes usw., nötig.

Der Erfindung liegt die Aufgabe zugrunde, hierfür eine Schaltungsanordnung einfachen Aufbaues zu schaffen.

Diese Aufgabe wird gemäß der Erfindung in der Weise gelöst, daß im Empfänger einem das digitale Nachrichtensignal umwandelnden Digital-Konverter eingangsseitig ein Schaltungszweig parallel angeschaltet ist aus einem Exklusiv-ODER mit zwei Eingängen und einem Verzögerungselement in der Zuleitung zu einem Eingang und aus einem

Klu 1 Toi / 26.10.1979

mit dem Ausgang des Exklusiv-ODER-Gatters verbundenen_
Digitalzähler, der von einem quarzstabilisierten Oszillator mit einer Frequenz vom Vielfachen der gewünschten Taktfrequenz angesteuert wird und dessen Ausgang mit dem Digital-Konverter verbunden ist.

Vorteilhafte Ausgestaltungen und Weiterbildungen des Anmeldungsgegenstandes sind in den Unteransprüchen angegeben.

Nachstehend wird die Erfindung an Hand von in der Zeichnung dargestellten Ausführungbeispielen näher erläutert.

Es zeigen:

Fig. 1  eine Schaltung zur Nachrichtenübertragung mit Taktrückgewinnung,

Fig. 2  das Impulsdiagramm für die Schaltung nach Fig. 1,

Fig. 3  eine weitere Schaltung zur Nachrichtenübertragung mit Taktrückgewinnung,

Fig. 4  eine Schaltung zur Nachrichtenübertragung mit Taktrückgewinnung für den Vollduplexverkehr und

Fig. 5  die Sende-/Empfangsstation einer Schaltung nach Fig.4.

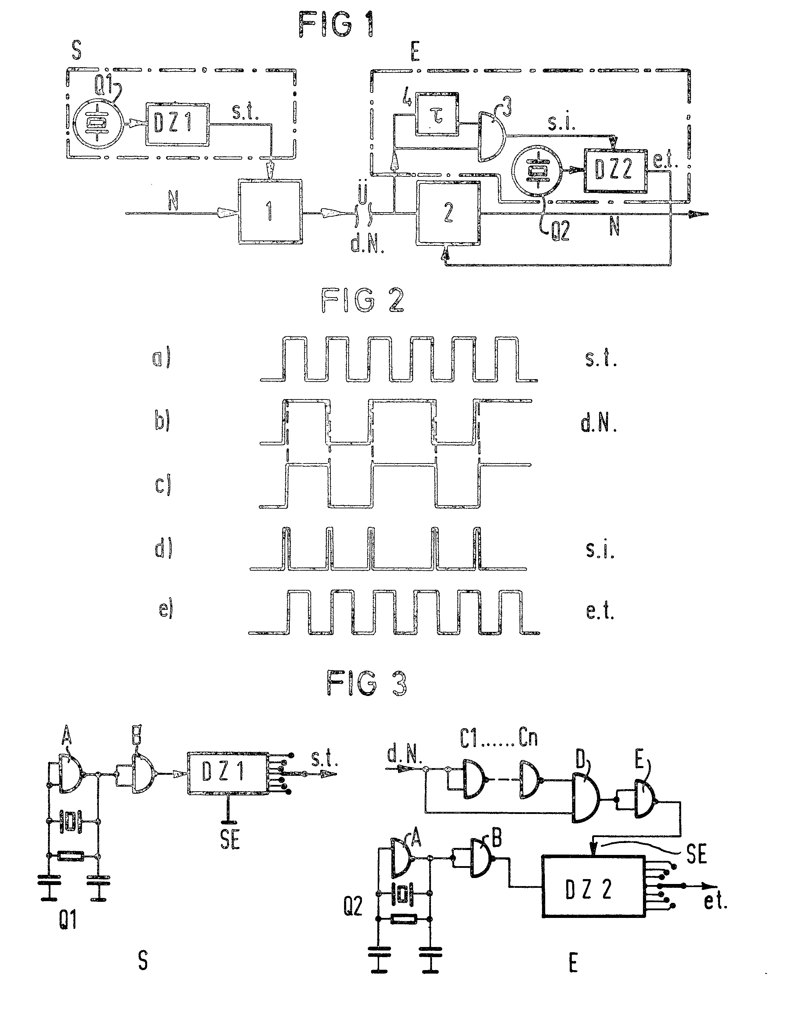

In Fig. 1 ist in einem Blockschaltbild eine Übertragungseinrichtung mit einem Sender S, einer Übertragungsstrecke Ü für die Übertragung der digitalen Nachricht d.N. und einem Empfänger E dargestellt. Die Einrichtungen zur Erzeugung des Sendetaktes s.t. und des Empfangstaktes e.t. im Sender S bzw. Empfänger E sind strichpunktiert umrandet. Auf der Sendeseite und der Empfangsseite ist jeweils ein digitaler Konverter 1 bzw. 2, bestehend aus einem Modulator bzw. einem Demodulator, vorgesehen, in dem sendeseitig die Umwandlung der Nachricht in ein digitales Signal für die Übertragung und empfangsseitig die Umwandlung des empfangenen digitalen Signals in ein analoges Signal erfolgt. Der Sendetakt s.t. wird von einem quarzstabilen Oszillator Q1 abgeleitet, der an einen digitalen Zähler DZ1 angeschaltet ist. Der in diesem gebildete Sendetakt s.t. wird dem digitalen Konverter 1 zugeführt. Der zum Sendetakt s.t. synchron verlaufende Empfangstakt e.t. wird dadurch erzeugt, daß im Empfänger ein quarzstabilisierter Oszillator Q2, dessen Frequenz ein Vielfaches, insbesondere ein $2^n$- faches, der gewünschten Taktfrequenz beträgt, einen digitalen Zähler DZ2 ansteuert, so daß an dessen Ausgang ein digitales Signal mit der Frequenz des zu regenerierenden Taktes entsteht. Die Frequenz der digitalen Oszillatoren ist dabei wesentlich größer als die Taktfrequenz. Das digitale Nachrichtensignal wird empfangsseitig zugleich einem dem digitalen Konverter 2 eingangsseitig parallel liegenden Exklusiv-ODER-Gatter 3 zugeführt, und zwar dem einen Eingang des Gatters 3 direkt und dem anderen Eingang über ein Laufzeitglied 4, in dem es um die Zeit $\tau$ verzögert wird. Am Ausgang des Exklusiv-ODER-Gatters 3 entsteht jeweils bei einem positiven oder negativen Wechsel der binären Information eines Bits ein in der Breite von der Verzögerungszeit $\tau$ des Laufzeitgliedes 4 abhängiger Impuls, der auf den Setzeingang des digitalen Zählers DZ2 einwirkt.

Bei jedem Wechsel des binären Nachrichtensignals, der durch den Sendetakt bitweise bestimmt ist, wird der digitale Zähler DZ2 für kurze Zeit auf den Zählzustand Null rückgesetzt und beginnt danach erneut mit dem Zählvorgang. Ist die Verzögerungszeit $\tau$ des Laufzeitgliedes 4 klein gegenüber der Taktfrequenz, so entspricht der am Ausgang des digitalen Zählers DZ2 entstehende Empfangstakt e.t. in Frequenz und Phase hinreichend genau dem in der Nachricht enthaltenen Sendetakt. Der Empfangstakt e.t. wird auf den digitalen Konverter 2 gegeben.

Fig. 2 zeigt das Impulsdiagramm der Schaltunganordnung nach Fig. 1. Dabei ist im Diagramm a) der Sendetakt s.t. dargestellt, im Diagramm b) der Verlaug einer digitalen Nachricht, im Diagramm c) die um die Zeit $\tau$ verzögerte digitale Nachricht entsprechend Diagramm b), in Diagramm d) die Setzimpulse s.i., die am Ausgang des Exklusiv-ODER-Gatters 3 entstehen, und im Diagramm e) der zum Sendetakt synchron verlaufende Empfangstakt e.t.

In Fig.3 sind in einer Teildarstellung die Einrichtungen zur Erzeugung des Sendetaktes im Sender S und des Empfangstaktes im Empfänger E dargestellt. Sendeseitig wird mit einem quarzstabilisierten Oszillator Q1, bestehend aus einem rückgekoppelten NAND-Gatter A, das hochfrequente Signal erzeugt und über eine Trennstufe in Form eines Gatters B an den Zähleingang eines digitalen Zählers DZ1 abgegeben, an dessen Ausgängen die jeweils gewünschte Sendetaktfrequenz abgenommen wird. Empfangsseitig wird eine gleiche Schaltanordnung verwendet, nämlich ein aus einem rückgekoppelten NAND-Gatter A bestehender quarzstabilisierter Oszillator Q2, der über eine Trennstufe in Form eines Gatters B an den Zähleingang eines digitalen Zählers DZ2 angeschlossen ist, der einen Setzeingang SE enthält. Die empfangene digitale Nachricht d.N. gelangt einmal dirket, zum anderen über ein die Funktion eines Laufzeitgliedes übernehmendes Gatter C, das hierbei aus einer ungeradzahligen Folge von NAND-Gattern C1...Cn besteht, an die beiden Eingänge eines Exklusiv-ODER-Gatters D. Die am Ausgang von D entstehenden kurzer Impulse werden über ein NAND-Gatter E auf den Setzeingang SE des Digitalen Zählers DZ2 geschaltet. Am digitalen Zähler DZ2 kann dann an seinen Ausgängen eineTaktfrequenz (Empfangstakt e.t.) entsprechender

79 P 6 6 9 8 EUR

Größe wahlweise abgenommen werden. Die Frequenzen der quarzstabilisierten Oszillatoren Q1 und Q2 von Sender S und Empfänger E sowie der Teilfaktor können zweckmäßigerweise gleich sein, brauchen dies jedoch nich unbedingt.

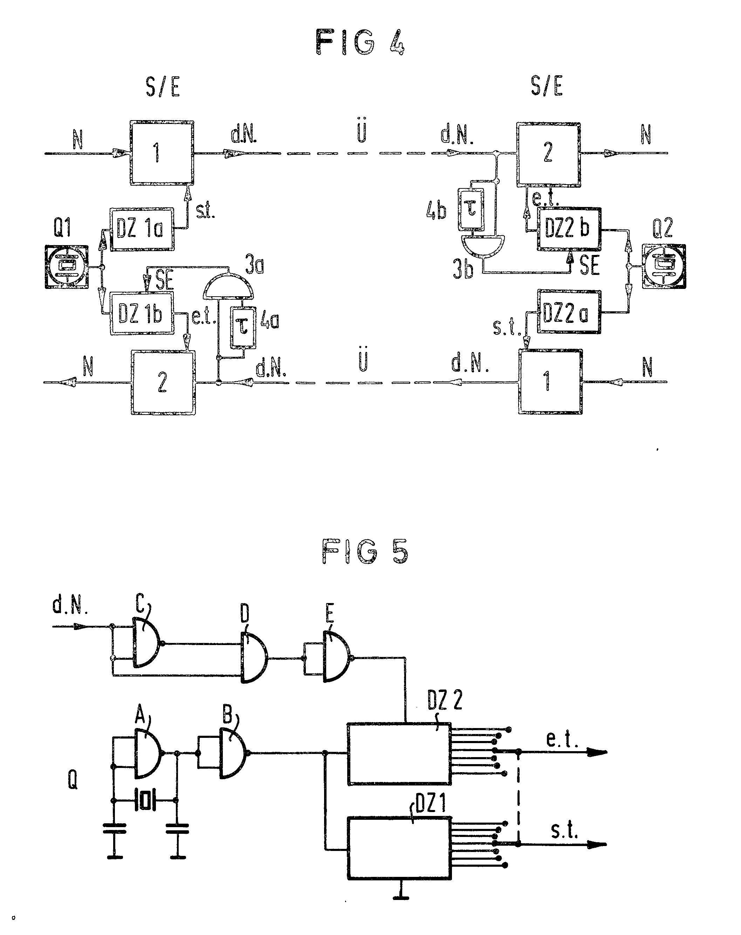

Fig. 4 zeigt eine Schaltung zur Nachrichtneübertraung mit Taktrückgewinnung für den Vollduplexverkehr, d.h. gleichzeitiges Senden und Empfangen in den Endstellen S/E. Dabei ist eine unabhängige Takterzeugung bzw. -regenerierung in Sende- und Empfangseinrichtung vorgesehen. Die Sende-/Empfangsstellen S/E enthalten für die Erzeugung des Sendetaktes und des Empfangstaktes jeweils einen gemeinsamen quarzstabilisierten Oszillator Q1 bzw. Q2. Dieser ist sowohl mit einem digitalen Zähler DZ1a bzw. DZ2a für die Abgabe des Sendetaktes s.t. verbunden, als auch mit einem digitalen Zähler DZ1b bzw. DZb2/ für die Erzeugung des Empfangstaktes e.t., wobei der Setzeingang SE des digitalen Zählers DZ1b bzw. DZ2b im Empfangszweig der Sende-/Empfangsstellen S/E mit dem Ausgang eines Exklusiv-ODER-Gatters 3a bzw. 3b verbunden ist, dessen beiden Eingängen die empfangene digitale Nachricht d.N. einmal direkt und zum anderen über ein Verzögerungselement 4a bzw. 4b zugeführt wird. Aus den den Empfangskonvertern zugeführten digitalen Nachrichten d.N. wird durch Demodulation jeweils die Nachricht N gewonnen.

Fig. 5 zeigt eine Schaltung für die Taktversorgung der Sende-/Empfangsstationen nach Fig. 4. Für den Sende- und Empfangstakt wird dabei ein gemeinsamer Oszillator Q verwendet. Im Grundaufbau entspricht diese Schaltung den in Fig. 3 dargestellten Schalteinrichtungen für den Sender und Empfänger, die hierbei zu einer einzigen Schaltung zusammengefaßt sind. Die empfangene digitale Nachricht d.N. wird dem einen Eingang des Exklusiv-ODER-Gatters D/ein Gatter C über und dem anderen Eingang ...

0028001

dieses Gatters direkt zugeführt. Die am Ausgang des Gatters D entstehenden kurzen Impulse werden über ein NAND-Gatter E auf den Setzeingang des digitalen Zählers DZ2 geschaltet, an dessen Ausgängen der jeweilige Empfangstakt e.t. abgenommen wird. Der aus einem rückgekoppelten NAND-Gatter A bestehende quarzstabilisierte Oszillator Q ist über eine Trennstufe in Form eines Gatters B an den Zähleingang sowohl des digitalen Zählers DZ2 für den Empfangstakt als auch des digitalen Zählers DZ1 für den Sendetakt angeschlossen, an deren Ausgägnen die jeweils gewünschten Taktfrequenzen abgenommen werden. Die Ausgänge sind, wie strichliert dargestellt ist, in der Weise miteinander verbunden, daß eine synchrone Umschaltung für den gewünschten Sendetakt und den entsprechenden Empfangstakt vorgenommen werden kann.

5 Patentansprüche
5 Figuren

- 7 -

Patentansprüche                          VPA 79 P 6 6 9 8 EUR

1. Schaltungsanordnung zur empfangsseitigen Taktrückgewinnung bei digitaler taktgebundener Nachrichtenübertragung, d a d u r c h  g e k e n n z e i c h n e t, daß im Empfänger (E) einem das digitale Nachrichtensignal (d.n.) umwandelnden Digital-Konverter (2) eingangsseitig ein Schaltungszweig parallel angeschaltet ist aus einem Exklusiv-ODER-Gatter (3) mit zwei Eingängen und einem Verzögerungselement (4) in der Zuleitung zu einem Eingang und aus einem mit dem Ausgang des Exklusiv-ODER-Gatters (3) verbundenen Digitalzähler (DZ2), der von einem quarzstabilisierten Oszillator (Q2) mit einer Frequenz vom Vielfachen der gewünschten Taktfrequenz angesteuert wird und dessen Ausgang mit dem Digital-Konverter (2) verbunden ist.

2. Schaltungsanordnung nach Anspruch 1, d a d u r c h  g e k e n n z e i c h n e t, daß das Verzögerungselement (4) ein Laufzeitglied ist.

3. Schaltungsanordnung nach Anspruch 1, d a d u r c h  g e k e n n z e i c h n e t, daß das Verzögerungselement (4) ein Gatter ist.

4. Schaltungsanordnung nach Anspruch 1, d a d u r c h  g e k e n n z e i c h n e t, daß das Verzögerungselement (4) aus einer ungeradzahligen Folge von NAND-Gattern besteht.

5. Schaltungsanordnung nach einem der vorhergehenden Ansprüche, d a d u r c h  g e k e n n z e i c h n e t, daß bei Vollduplexbetrieb der Nachrichtenübertragung in den jeweiligen Endstellen eine unabhängige Takterzeugung in Sende- und Empfangsrichtung vorgesehen ist mit jeweils

0028001

einem gemeinsamen Oszillator für die Erzeugung des Sende-
und Empfangstaktes.

1/2

FIG 1

FIG 2

a)           s.t.

b)           d.N.

c)

d)           s.i.

e)           e.t.

FIG 3

# FIG 4

# FIG 5

# EUROPÄISCHER RECHERCHENBERICHT

Europäisches Patentamt

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | US - A - 4 064 361 (BELL)<br>+ Spalte 1, Zeile 54 - Spalte 2, Zeile 2; Spalte 2, Zeile 36 - Spalte 3, Zeile 38; Fig. 1,2 + | 1 |
| | AT - B - 332 461 (SIEMENS)<br>+ Seite 2, Zeilen 1-12; Seite 2, Zeile 52 - Seite 3, Zeile 5; Fig. 1 + | 1 |
| | GB - A - 1 411 615 (TELECOMMUNI-CATIONS RADIOELECTRIQUES ET TELEPHONIQUES)<br>+ Seite 3, Zeile 114 - Seite 4, Zeile 58; Fig. 3 + | 1,5 |
| | DE - A - 1 541 922 (FERNSEH GMBH)<br>+ Seite 1, Zeilen 1-3; Seite 2, Zeilen 4-15; Fig. 1 + | 2 |

### KLASSIFIKATION DER ANMELDUNG (Int. Cl.³)

H 04 L 7/02
H 03 L 7/00

### RECHERCHIERTE SACHGEBIETE (Int. Cl.³)

H 04 L 7/00
H 03 L 7/00
H 04 L 25/00
H 04 J 3/00
H 03 H 7/00

### KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patent-familie, übereinstimmendes Dokument

X Der vorliegende Recherchenbericht wurde für alle Patentansprüche erstellt.

| Recherchenort | Abschlußdatum der Recherche | Prüfer |
|---|---|---|
| WIEN | 29-01-1981 | HAJOS |

EPA form 1503.1   06.78